(19)

**Europäisches Patentamt**

**European Patent Office**

**Office européen des brevets**

(11) **EP 4 685 708 A1**

(12) **EUROPEAN PATENT APPLICATION**

(43) Date of publication:
**28.01.2026 Bulletin 2026/05**

(21) Application number: **24275091.7**

(22) Date of filing: **23.07.2024**

(51) International Patent Classification (IPC):
**G06N 3/096** (2023.01) **G06N 3/084** (2023.01)

(52) Cooperative Patent Classification (CPC):
**G06N 3/096; G06N 3/084**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **BAE SYSTEMS plc**
**London SW1Y 5AD (GB)**

(72) Inventor: **The designation of the inventor has not
yet been filed**

(74) Representative: **BAE SYSTEMS plc
Group IP Department
Victory Point
Frimley
Camberley, Surrey GU16 7EX (GB)**

(54) **TRAINING A NEURAL NETWORK**

(57)    There is described a computer implemented method (200) of training a neural network. The method comprises obtaining (202) a set of feature embeddings for the training dataset, sampling (204) the training dataset to generate a minibatch, wherein the sampling comprises determining (206) a dissimilarity between instances of the training dataset in the feature embedding space, and selecting (208) instances for inclusion in the minibatch based on the determined dissimilarities, wherein instances having larger dissimilarity have a greater probability of being jointly selected for inclusion in the minibatch, and updating (210) the network.

Fig. 2

**Description**

FIELD

The present invention relates to a computer implemented method of training a neural network. The presently described techniques are particularly aimed at training a neural network for audio classification of marine objects.

BACKGROUND

Machine learning methods often underperform on data lying outside the training distribution. The sensitivity to distributional shifts (also called domain shifts) is currently a severe limitation to the widespread deployment of AI to real-world problems. In particular, domain shifts are a major obstacle to the deployment of automated bioacoustic monitoring tools to new recording environments or habitats.

Invariance regularisation (also referred to as invariant feature learning or distribution alignment) is a dominant approach for dealing with these shifts, in which the feature distributions of data from different domains are encouraged to match (by minimising some measure of statistical distance). Given meta-data which groups samples according to certain characteristics or contexts (referred to as domains), the technique aims to learn feature representations which are invariant to these characteristics, in the hope that this increases the generalisation power of the learned model. If unlabelled data from the test domain is included, this technique is referred to as unsupervised domain adaptation (UDA).

However, in a deep learning setup, the statistical distance is only computed over small minibatches of data at a time. In the current approaches, the small minibatches often have poor representation of their underlying distributions, resulting in extremely noisy distance estimates. Thus invariance regularisation has frequently been found to have a negligible or even negative impact on training compared to vanilla empirical risk minimisation (ERM) techniques, which are not optimised for domain generalisation.

As such it is now desired explore alternative techniques for training a neural network in a deep learning setup, particularly for domain generalisation.

SUMMARY

According to an aspect of the present invention, there is provided a computer implemented method of training a neural network using a training dataset. The method comprises obtaining feature embeddings for the training dataset and sampling the training dataset to generate a minibatch. The sampling comprises determining a dissimilarity between instances of the training dataset in the feature embedding space, and selecting instances for inclusion in the minibatch based on the determined dissimilarities, wherein instances having larger dissimilarity have a greater probability of being jointly selected for inclusion in the minibatch. The method then comprises updating the neural network using the generated minibatch.

In an example, the sampling may comprise performing k-means clustering to generate a set of centroids for the training data set, and determining the dissimilarities may comprise computing distances between each data point and a closest centroid.

In an example, determining dissimilarity may comprises calculating a similarity matrix for the set of feature embeddings, for example using a radial bias function.

In an example, determining dissimilarities may comprise calculating a distance between each of the instances in the set of feature embeddings and a closest point in a subset of the set of feature embeddings, and selecting instances for inclusion in the minibatch may comprise iteratively selecting an instance and adding the instance to the subset against which the dissimilarities are calculated (which is then used to recomputing the dissimilarities when the next instance is being selected for inclusion in the subset). When the subset is of the desired size of the minibatch, the final subset is used as the minibatch.

In an example, the probability of an instance being selected for inclusion in the minibatch may also be based on a weight applied to each instance.

In an example, the method may further comprise iterating the sampling step and updating step. After a predetermined number of iterations, the method may comprise reobtaining the set of feature embeddings using the updated neural network, for use in the sampling step.

In an example, updating the neural network may comprise the use of invariance regularisation, and the neural network may also be configured for domain generalisation.

In an example, the neural network may be configured to assign classifications to input data. For example, where training data comprises acoustic data, the neural network may be configured to classify a sound source corresponding to the acoustic data. For example, the acoustic data may comprise sounds corresponding to different types of marine vessel, and the neural network may be configured to assign classes (or labels) to those vessels. In an example the types of marine vessel include at least one of pleasure vessel, cargo vessel, fishing vessel, and military vessel. Other examples of acoustic data include marine animals, and classification into types of marine animal; for example, humpback whale or not humpback whale.

In a related aspect of the present invention, there is provided a computer implemented method of inference of a neural network trained as outlined above.

As will be appreciated by one skilled in the art, the present techniques may be embodied as a system, method or computer program product. Accordingly, present techniques may take the form of an entirely hardware embodiment, an entirely software embodiment, or an embodiment combining software and hardware aspects.

Furthermore, the present techniques may take the form of a computer program product embodied in a computer readable medium having computer readable program code embodied thereon. The computer readable medium may be a computer readable signal medium or a computer readable storage medium. A computer readable medium may be, for example, but is not limited to, an electronic, magnetic, optical, electromagnetic, infrared, or semiconductor system, apparatus, or device, or any suitable combination of the foregoing.

Computer program code for carrying out operations of the present techniques may be written in any combination of one or more programming languages, including object oriented programming languages and conventional procedural programming languages. Code components may be embodied as procedures, methods or the like, and may comprise sub-components which may take the form of instructions or sequences of instructions at any of the levels of abstraction, from the direct machine instructions of a native instruction set to high-level compiled or interpreted language constructs.

Embodiments of the present techniques also provide a non-transitory data carrier carrying code which, when implemented on a processor, causes the processor to carry out any of the methods described herein.

The techniques further provide processor control code to implement the above-described methods, for example on a general purpose computer system or on a digital signal processor (DSP). The techniques also provide a carrier carrying processor control code to, when running, implement any of the above methods, in particular on a non-transitory data carrier. The code may be provided on a carrier such as a disk, a microprocessor, CD- or DVD-ROM, programmed memory such as non-volatile memory (e.g. Flash) or read-only memory (firmware), or on a data carrier such as an optical or electrical signal carrier. Code (and/or data) to implement embodiments of the techniques described herein may comprise source, object or executable code in a conventional programming language (interpreted or compiled) such as Python, C, or assembly code, code for setting up or controlling an ASIC (Application Specific Integrated Circuit) or FPGA (Field Programmable Gate Array), or code for a hardware description language such as Verilog (RTM) or VHDL (Very high speed integrated circuit Hardware Description Language). As the skilled person will appreciate, such code and/or data may be distributed between a plurality of coupled components in communication with one another. The techniques may comprise a controller which includes a microprocessor, working memory and program memory coupled to one or more of the components of the system.

It will also be clear to one of skill in the art that all or part of a logical method according to embodiments of the present techniques may suitably be embodied in a logic apparatus comprising logic elements to perform the steps of the above-described methods, and that such logic elements may comprise components such as logic gates in, for example a programmable logic array or application-specific integrated circuit. Such a logic arrangement may further be embodied in enabling elements for temporarily or permanently establishing logic structures in such an array or circuit using, for example, a virtual hardware descriptor language, which may be stored and transmitted using fixed or transmittable carrier media.

In an embodiment, the present techniques may be realised in the form of a data carrier having functional data thereon, said functional data comprising functional computer data structures to, when loaded into a computer system or network and operated upon thereby, enable said computer system to perform all the steps of the above-described method.

The methods described above may be wholly or partly performed on an apparatus, i.e. an electronic device, using a machine learning or artificial intelligence model. The model may be processed by an artificial intelligence-dedicated processor designed in a hardware structure specified for artificial intelligence model processing. The artificial intelligence model may be obtained by training. Here, "obtained by training" means that a predefined operation rule or artificial intelligence model configured to perform a desired feature (or purpose) is obtained by training a basic artificial intelligence model with multiple pieces of training data by a training algorithm. The artificial intelligence model may include a plurality of neural network layers. Each of the plurality of neural network layers includes a plurality of weight values and performs neural network computation by computation between a result of computation by a previous layer and the plurality of weight values.

As mentioned above, the present techniques may be implemented using an AI model. A function associated with AI may be performed through the non-volatile memory, the volatile memory, and the processor. The processor may include one or a plurality of processors. At this time, one or a plurality of processors may be a general purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a plurality of processors control the processing of the input data in accordance with a predefined operating rule or artificial intelligence (AI) model stored in the non-volatile memory and the volatile memory. The predefined operating rule or artificial intelligence model is provided through training or learning. Here, being provided through learning means that, by applying a learning algorithm to a plurality of learning data, a predefined operating rule or AI model of a desired characteristic is made. The learning may be performed in a device itself in which AI according to an embodiment is performed, and/or may be implemented through a separate server/system.

The AI model may consist of a plurality of neural network layers. Each layer has a plurality of weight values, and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks.

The learning algorithm is a method for training a predetermined target device (for example, a robot) using a plurality of learning data to cause, allow, or control the target device to make a determination or prediction. Examples of learning algorithms include, but are not limited to, supervised learning, unsupervised learning, semi-supervised learning, or reinforcement learning.

BRIEF DESCRIPTION OF THE FIGURES

Embodiments of the invention will now be described by way of example only with reference to the figures, in which:

Figure 1 shows an example electronic device;

Figure 2 shows an example method of training a neural network;

Figure 3 shows spectrograms of sounds produced by different marine objects (5 kHz bandwidth, time axis scales variable);

DETAILED DESCRIPTION

By way of introduction, embodiments of the present disclosure are based on the proposition that generating minibatches that better cover the support of their underlying distribution give higher quality distance estimates, and thus increase the effectiveness of deep learning algorithms including, for example, invariance regularisation methods. The described techniques look to induce diversity in each sampled minibatch, corresponding to datapoints being "spread out" (pairwise dissimilar) in the learned model's feature space.

Suitably, the described embodiments can be interpreted as a generalisation of class-balancing. It will be appreciated that complex real-world acoustic scenes have a far richer ontology than the fixed set of class labels provided for the specific learning task (which may only be binary). The present embodiments are therefore motivated by a desire to provide suitable representation of all trained (e.g., sound) events in a minibatch, analogous to class balancing in prior art training techniques.

Thus, an aim of the described embodiments is for a fast, scalable sampler which can stochastically draw independent, diverse minibatches of fixed cardinality from the corpus. Instances of data may be weighted to bias their selection probability based on prior knowledge, e.g., the label distribution (without explicitly class-balancing the data, as doing so is at odds with the objective of diversity) as some classes may have far greater variety than others; although it is noted that, given feature-label continuity, inducing diversity does tend to implicitly class-balance the data anyway.

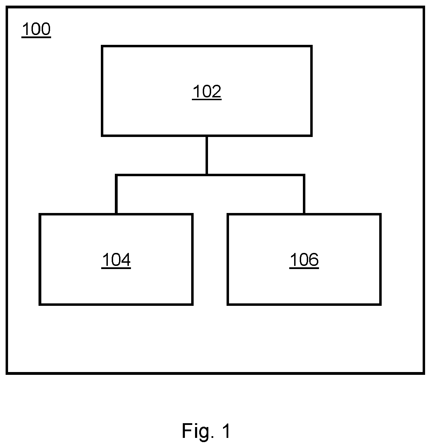

Figure 1 is a block diagram of a computing device 100 configurable to execute embodiments of the invention. The device will normally comprise, or be associated with, at least one processor 102, memory 104 and a communications interface 106.

The at least one processor 102 may comprise one or more of: a microprocessor, a microcontroller and an integrated circuit. The memory 104 may comprise volatile memory, such as random access memory (RAM), for use as temporary memory, and/or non-volatile memory such as Flash, read only memory (ROM), or electrically erasable programmable ROM (EEPROM), for storing data, programs, or instructions, for example. The communications interface 106 can provide data communication between the device and other devices/components, e.g. via a wireless or wired internet connection, a cellular network connection, or the like. Other components and features of the device, such as a housing, power source/supply, display, audio output, user interface, etc, will be well-known to the skilled person and need not be described herein in detail.

In some embodiments the computing device 100 may comprise a constrained-resource device, but which has at least the minimum hardware capabilities required to use a trained neural network/ML model. The device may be: a smartphone, tablet, laptop, computer or computing device, virtual assistant device, a connected camera, etc. It will be understood that this is a non-exhaustive and non-limiting list of example devices.

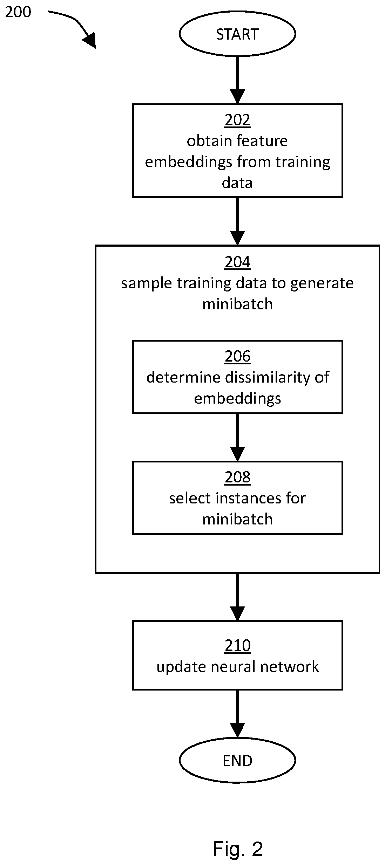

Figure 2 shows an example method, for training a neural network, that can be performed by means of software instructions being executed by the computing device 100, according to an embodiment. However, in some embodiments, one or more of the steps may be performed by a remote computing device, such as a server or a cloud service, that is in communication with the device 100. It will also be appreciated that some of the steps described herein may be re-ordered or omitted, additional steps may be performed, and although the steps are shown as being performed in sequence, in alternative embodiments some of them may be performed concurrently, possibly on different processors or cores.

It will also be understood that embodiments can be implemented using any suitable software, programming language, data editors, etc, and may be represented/stored/processed using any suitable data structures and formats. The method can be initiated in any suitable manner, such as an application being opened by a user or called by another process. The steps may be executed by a stand-alone application or may be provided as part of a multi-function application.

The neural network may be configured to perform at least one of a classifier and/or a regression operation. In an example, the neural network may be trained using invariance regularisation, and further configured to be optimised for domain generalisation.

In the following, it is assumed that a training data set to be used to train the neural network for its intended purpose is readily available for such use. Suitably, embodiments herein may be considered, if needed, to be prepended with a step of obtaining such training data. In an example, obtaining training data may comprise downloading the training data from a publicly available repository. In another example, obtaining the training data may comprise generating a bespoke data set using suitable techniques as will be familiar to those in the art.

For example, the purpose of the neural network may be at least one of sound analysis or image analysis, and the training data might respectively comprise audio recordings or camera images, as appropriate. Sound analysis tasks might include classification based on sound data (for example, a digital sound signal). For example, classification of marine sounds, such as classification of a type of marine vessel based on the noise it produces, or detection of certain types of marine animals such as humpback whales. Image analysis might include, for example, tumour detection, object classification, or wild animal classification.

Suitably, the training (or source) data set comprises the type of data that the neural network is configured to receive as input (which will depend on its purpose). For example, where the neural network is configured for digital sound analysis, the training data may comprise sound files (e.g., audio recordings) of various classes of object to be classified. Where the neural network is configured for image classification, the training data may comprise images showing various classes of object to be classified.

For example, for marine vessel classification, the training data may comprise sounds produced by different classifications of boats: the classes may be at least one of pleasure vessel, cargo vessel, fishing vessel, or military vessel. For marine animal detection, the classification may be binary in the sense that the data indicates the presence of the particular animal or not; for example, whether a recorded sound was produced by a humpback whale.

The training data may have been collected from different domains. In the present context, domains correspond to different recording (sound) or capture (image) information; that is, the circumstances under which the data was collected. For example, for marine sound analysis, domains may include at least one of a location of the recording (e.g., which body of water the data was collected from, such as English Channel, North Sea, latitude and longitude, and so on), a time of day of the recording, weather during the recording, and position of recording equipment on a vessel.

At step 202, the method comprises obtaining feature embeddings from the training data. As will be appreciated by those in the art, the embeddings are representations of the training data that may be processed by the neural network to determine similarities, and so on. In an example, the feature embeddings may be obtained using a pre-trained feature extractor configured to generate suitable embeddings from the type of training data being used (for example, embeddings which encode audio characteristics of a recorded sound). Alternatively, the embeddings may be generated by the neural network.

At step 204, the method comprises sampling the training dataset to generate a minibatch of datapoints (also termed instances herein) for updating the neural network. The minibatch size may be predetermined; for example, according to designer/user settings, or determined hardware capabilities of computing device 100. For example, the minibatch size may be 32, as is common in the art of deep learning.

Sampling the training dataset comprises, at step 206, determining a dissimilarity between instances of the training dataset in the feature embedding space. Here dissimilarity means determining differences between pairs of data given some quantitative measure of their information content. By way of example, distance measures may include squared Euclidian distances, Manhattan distances, cosine distances, or computations of a radial basis function kernel.

Suitably, the sampling also comprises, at step 206, selecting instances for inclusion in the minibatch based on the determined dissimilarities. Selection is probabilistic, such that instances having greater dissimilarity have a corresponding-ingly greater probability of being jointly selected for the minibatch. In this way does the method generate minibatches which are inherently dissimilar, so that they are more diverse yet also more representative (or put another way, more balanced) of the different domains of the training data (compared to prior art techniques).

In an embodiment, step 204 may be achieved using a determinantal point process (DPP) algorithm. In this case, given a set of feature embeddings $X = \{x_1, \ldots, x_n\}, x_i \in \mathbb{R}^d$ - corresponding to the training data set - then a point process on $X$ is a probability measure over "point configurations" (i.e., subsets) of $X$. Sampling a point process is thus equivalent to randomly drawing a subset of $X$. Suitably, the probability of selecting a subset $\mathcal{S}$ (step 208) is proportional to the determinant of a likelihood kernel $L_{\mathcal{S}}$ describing pairwise similarities between its elements. Specifically:

$$\mathbb{P}[\mathcal{S}] = \frac{\det L_{\mathcal{S}}}{\det [I + L]}, \qquad \forall \mathcal{S} \subseteq \mathcal{X}, \qquad\qquad (1)$$

where $L \in \mathbb{R}^{n \times n}$ is the kernel over all $X$. When the DPP is conditioned to a fixed cardinality $|\mathcal{S}| = k \le \mathrm{rank}(L)$, this is known as a $k$-DPP. As a result, large off-diagonal entries in $L$ imply low probability of co-occurrence in $\mathcal{S}$.

In some implementations of $k$-DPP, it may be desirable to apply weights $w = [w_1, \ldots, w_n]^T$ to each instance. In this case $L$ is defined based on a similarity matrix S, with each element weighted by the corresponding pair of weights: $L_{ij} = \sqrt{w_i w_j} S_{ij}$

In doing so, the $k$-DPP may be restricted to $k \le \mathrm{rank}(S)$. An appropriate choice of similarity measure (step 206) should ensure that $S$ is full rank (that is, the kernel should be strictly positive-definite), so as not to limit the minibatch size that can be used. For example, using a linear kernel $S_{ij} = x_i^T x_j$ results in $k \le d$, but this could be lower if the features are not all linearly independent.

As such, it is preferred to use a radial basis function (RBF) kernel instead. Adopting a common heuristic for the bandwidth parameter $\gamma$, an RBF mixture kernel may be defined by

$$S_{ij} = \sum_{\gamma \in \mathcal{G}} e^{-\gamma \|x_i - x_j\|^2}, \qquad\qquad (2)$$

with $\mathcal{G}$ = {0.001, 0.01, 0.1, 1, 10}.

In another embodiment, sampling step 202 may be achieved using a first $k$-means algorithm (labelled $k$-means++ in the results below). This algorithm is designed, in general, to select a subset of highly dissimilar points from a corpus and may be adapted to induce dissimilarity as follows:

1) Choose an initial point at random from $X$ (i.e., the set of feature embeddings). Optionally, this choice can be weighted by $w$. Then remove the point from $X$ and append to $\mathcal{S}$. It can be considered that $\mathcal{S}$ is initialised to predetermined size $k$ and then filled.

2) For each $x_i \in X$, compute the distance $D(x_i)$ between $x_i$ and the closest point in

$$\mathcal{S} : D(x_i) = \min_{x' \in \mathcal{S}} \|x_i - x'\|$$

(step 206)

3) Choose the next point with probability proportional to $D(x_i)^2$, or $w_i D(x_i)^2$ if weighted (step 208).

4) Repeat steps 2 and 3 until $k$ points are chosen (so that $\mathcal{S}$ is filled).

In yet another embodiment, the sampling step 202 may be achieved using a second $k$-means algorithm as follows (labelled $k$-means 2 in the results below):

1) Perform $k$-means clustering on the feature embeddings $X$ and store a cluster centroids in $\mathcal{C} = \{c_1, ..., c_k\}$. Here it can be seen that as many clusters are generated as the minibatch size $k$.

2) For each $x_i \in X$, compute the distance between $x_i$ and the closest centroid:

$$D(x_i) = \min_{c \in \mathcal{C}} \|x_i - c\|$$

(step 206)

3) Sample one point from each cluster with probability proportional to $\dfrac{w_i}{D(x_i)^2}$ (step 208).

At step 210, the method comprises updating the network using the generated minibatch, as will be familiar to those in the art of deep learning.

Steps 204 to 210 are then repeated so as to train the network using a probabilistically different minibatch.

Ideally, the sampling would have access to up-to-date feature embeddings for every draw. However, recomputing $X$ (and $S$ in the DPP case) at every training iteration would be slow, particularly on a resource constrained device. As such, it is preferred that the sampler being used (e.g., the chosen algorithm above) is updated (or put another way, reinitialised) periodically; for example every $t$ training iterations. More specifically, step 202 of obtaining feature embeddings is reperformed every $t$ iterations by calculating new feature embeddings using the updated neural network. In other words, whereas steps 204 to 210 are performed at every training iteration, the feature embeddings obtained at step 202 are recomputed every $t$ iterations and, in turn, the recomputed embeddings are used at step 204. $t$ is thus a trade-off between training speed and the quality of the (dis)similarity information.

As outlined above, the present techniques have generally assumed that a pretrained feature extractor provides the initial embeddings for initialisation of the sampler. However, in situations where no pretrained feature extractor is available, the neural network may be used to generate the initial embeddings by using a standard (weighted) random sampler, before switching to a diversity-based sampling technique such as those outlined above, and initiating method 200. For convenience, standard random sampling may be performed the first t iterations, matching the $t$ that will be later used to determined the embedding recompute interval. In some examples, however, it may be appropriate to simply first initialise a set of feature embeddings using a diversity-based sampler with features from a newly-initialised network with random weights.

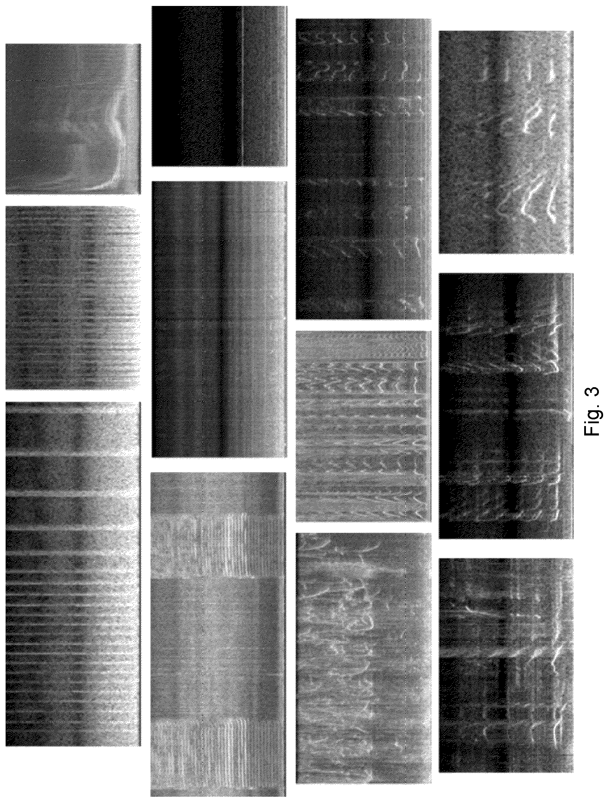

Figure 3 shows exemplary spectrograms for sounds captured for marine animal classification purposes. Top row: sperm whale clicks, pilot whale clicks, seal vocalisations. Second row: minke whale boings, right whale calls in strong vessel noise, electrical interference. Third row: dolphin whistles, dolphin creaks, right whale calls. Bottom row: three humpback whale calls.

The dataset comprises 43,385 samples split roughly equally across 4 recording locations (Madagascar, UK, Hawaii, and Australia). Each sample is a PCEN-normalised mel-spectrogram (i.e., a monochrome image) of a 4-second audio clip sampled at 10 kHz. For the presently presented results, the data is simply labelled as either "humpback whale" or "not humpback whale", though in other examples (not shown) the data could be used to classify the other animals too. Here a simple 4-layer CNN architecture is used as the core model, with 16 filters per layer and RELU activations.

Experiments were conducted based on a DomainBed framework (I. Gulrajani and D. Lopez-Paz, "In Search of Lost Domain Generalization," ICLR, 2021). Here, three locations (domains) are used at a time for training and the remaining fourth location (domain) for testing. Models are trained for 2,000 iterations, with the samplers updated every 400. Hyperparameters are chosen via random search of size 40 and experiments are repeated 5 times for reproducibility. All other options follow typical DomainBed defaults.

Two invariance regularisation algorithms were utilised: correlation alignment (CORAL) (B. Sun and K. Saenko, "Deep CORAL: Correlation Alignment for Deep Domain Adaptation," ECCV, vol. 9915 LNCS, pp. 443-450, Jul. 2016, doi: 10.10071978-3-319-49409-8_35) and domain-adversarial neural networks (DANN) (Y. Ganin et al., "Domain-Adversarial Training of Neural Networks," JMLR, 2015), in both adaptive (UDA) and non-adaptive (domain generalisation, DG) paradigms.

In the DG setting, these are used only to align the three training domains to each other. For UDA, in addition to this, the training domains are also aligned to an unlabelled, held-out subset of the test domain (that is, not the same samples that are used to determine accuracy). Results are also presented for empirical risk minimisation (ERM), which does not explicitly perform domain alignment and by its nature is DG only.

In addition to the diversity-based data samplers discussed above ($k$-DPP, $k$-means++, $k$-means 2), results are also presented for a baseline of standard class-weighted random sampling. The performance metric is average model accuracy across the 4 test domains. Suitably, test domain accuracy (%) for each sampler and training algorithm is shown in Table 1.

Table 1

| | DG | | | UDA | | |
|---|---|---|---|---|---|---|
| Sampler | ERM | CORAL | DANN | CORAL | DANN | Average |
| Random | $91.3 \pm 0.7$ | $86.2 \pm 0.2$ | $82.1 \pm 1.2$ | $90.4 \pm 0.8$ | $81.7 \pm 1.6$ | $86.3 \pm 0.5$ |
| *k*-DPP | $91.6 \pm 0.4$ | $90.6 \pm 0.2$ | $87.7 \pm 0.9$ | $94.0 \pm 0.2$ | $85.2 \pm 1.1$ | $89.8 \pm 0.3$ |
| *k*-means++ | $92.9 \pm 0.7$ | $91.5 \pm 0.7$ | $87.3 \pm 1.6$ | $93.8 \pm 0.2$ | $86.6 \pm 1.7$ | $90.4 \pm 0.5$ |
| *k*-means 2 | $93.0 \pm 0.2$ | $91.5 \pm 0.4$ | $87.7 \pm 1.1$ | $93.9 \pm 0.3$ | $88.0 \pm 1.4$ | $90.8 \pm 0.4$ |

Firstly, it is notable that these results reproduce previous findings that have been frequently reported in the literature: with standard random samplers, invariance regularisation performs poorly, underperforming ERM by as much as 10%. The results clearly show that using diversity-based sampling improves these methods, with consistent accuracy gains of 4 to 5 percentage points. Interestingly, ERM is also slightly improved, suggesting a general benefit to ensuring equal representation of all sound events.

Despite these gains, both CORAL and DANN still underperform ERM in the DG setting, showing just how difficult the DG problem is - as well as how strong the ERM baseline is. However, in the UDA setting, diversity-based sampling enables CORAL to finally exceed ERM, achieving the highest performance out of all the methods we test.

On average, accuracy is slightly higher for *k*-means 2 algorithm, which in any case is computationally faster, easier to scale, and perhaps also more intuitive to understand and implement, making it the more favourable method overall.

It is posited that diversity-based sampling improves invariance regularisation as it reduces the errors in the distance estimates when the sample sizes are small. To test this hypothesis, estimation error of a popular distance estimate (the MMD) applied can be compared to the features of the multi-domain dataset.

Let $\mathcal{F} = \mathbb{R}^d$ be the feature space induced by the presently described models. The MMD is computed on the basis of a positive-definite kernel $\kappa : \mathcal{F} \times \mathcal{F} \to \mathbb{R}$ and is defined as the distance between distribution means embedded in the reproducing kernel Hilbert space $\mathcal{H}$ associated with $\kappa$. For two distributions $\mathbb{P}_1, \mathbb{P}_2 \in \mathcal{P}$ then

$$MMD(\mathbb{P}_1, \mathbb{P}_2) = \|\mu(\mathbb{P}_1) - \mu(\mathbb{P}_2)\|_{\mathcal{H}}, \tag{3}$$

where $\mu : \mathcal{P} \to \mathcal{H}$ is the mean map operation

$$\mu(\mathbb{P}) = \mathbb{E}_{x \sim \mathbb{P}}[\phi(x)] \cong \frac{1}{n} \sum_{x_1, \dots, x_n \sim \mathbb{P}} \phi(x) \tag{4}$$

and $\phi : \mathcal{F} \to \mathcal{H}$ is the implicit mapping associated with $\mathcal{H}$. For certain characteristic kernels, including the RBF, $\mu$ is injective, meaning every possible feature distribution $\mathbb{P} \in \mathcal{P}$ is uniquely represented in $\mathcal{H}$ and the MMD is 0 if and only if the distributions are identical.

Suitably, the testing may go as follows. A model was trained by ERM on three domains at a time, as for the results above. The aim was to compute the average pairwise MMD between these three domains, based on features extracted from the model and the same RBF mixture kernel defined in (2). A "ground-truth" MMD is computed using all the available data (~8000 samples per domain), and a set of 1000 MMDs computed using only 32 examples per domain, drawn stochastically using each of the samplers described previously. Finally, the mean absolute percentage error (MAPE) in the MMDs produced by each sampling strategy is computed, with respect to the "ground truth". The MAPE is defined as

$$\text{MAPE} = 100\% \frac{1}{1000D} \sum_{r=1}^{1000} \left| D - \hat{D}_r \right| \qquad (5)$$

here $D$ is the "ground-truth" MMD computed using the full dataset and $\hat{D}_r$ are the MMDs computed using only 32 examples per domain. This was done for all 4 combinations of training domains, and repeated 5 times for reproducibility. Suitably, MAPE (%) of the MMD estimates between domains, based on samples drawn by different sampling strategies, are shown in Table 2.

Table 2

| Sampler | MAPE by held-out domain (%) | | | | | QE |
| | 1 | 2 | 3 | 4 | Average | Average |
|---|---|---|---|---|---|---|
| Random | 50.3 ± 2.1 | 20.0 ± 0.5 | 33.9 ± 1.8 | 28.4 ± 1.3 | 33.1 ± 0.8 | 6861 ± 23 |
| *k*-DPP | 28.5 ± 2.3 | 26.8 ± 2.2 | 15.9 ± 0.8 | 20.4 ± 2.8 | 22.9 ± 1.1 | 4418 ± 12 |
| *k*-means++ | 8.7 ± 0.8 | 55.7 ± 1.1 | 26.5 ± 4.7 | 21.4 ± 4.2 | 28.1 ± 1.6 | 2425 ± 6 |
| *k*-means 2 | 9.6 ± 0.7 | 53.8 ± 0.6 | 27.5 ± 2.5 | 19.5 ± 1.9 | 27.6 ± 0.8 | 2264 ± 5 |

The results show that diversity-based samplers reduce the MAPE in the small-sample MMD estimates compared to the random sampler, for all but one of the training domain combinations. At present it is unclear why this pattern is reversed for Domain 2; however the average over all domains is nonetheless favourable. In this case, although *k*-DPP has produced significantly better MMD estimates than the other samplers, this does not directly translated into higher model accuracy in Table 1.

In summary, the above has described a diversity based sampling for enhancing training of neural networks such as might be used when invariance regularisation methods are used. It is demonstrated that training on diverse minibatches enables an adaptive invariance-regularised model to surpass the performance of ERM, a result that could not be achieved using standard random sampling methods. This is due to the improved distance estimates attained by increasing the distribution coverage of the minibatches.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

**Claims**

1. A computer implemented method of training a neural network using a training dataset, comprising:

    obtaining a set of feature embeddings for the training dataset;
    sampling the training dataset to generate a minibatch, wherein the sampling comprises:

       determining a dissimilarity between instances of the training dataset in a feature embedding space corresponding to the set of feature embeddings, and
       selecting instances for inclusion in the minibatch based on the determined dissimilarities,
       wherein instances having larger dissimilarity have a greater probability of being jointly selected for inclusion in the minibatch; and
       updating the neural network using the generated minibatch.

2. The method of claim 1, wherein the sampling comprises performing k-means clustering to generate a set of centroids for the training data set.

3. The method of claim 2, wherein determining the dissimilarity comprises computing distances between each data point and a closest centroid.

4. The method of claim 1, wherein determining dissimilarity comprises calculating a similarity matrix for the set of feature embeddings.

5. The method of claim 4, wherein the similarly matrix is generated using a radial bias function.

6. The method of claim 1, wherein determining dissimilarity comprises calculating a distance between each of the instances in the set of feature embeddings and a closest point in a subset of the set of feature embeddings, and selecting instances for inclusion in the minibatch comprises iteratively selecting an instance and adding the instance to the subset against which dissimilarity is calculated, and recomputing the dissimilarity.

7. The method of any preceding claim, wherein the probability of an instance being selected for inclusion in the minibatch is also based on a weight applied to each instance.

8. The method of any preceding claim, further comprising iterating the sampling step and updating step.

9. The method of claim 8, wherein after a predetermined number of iterations, the method comprises reobtaining the set of feature embeddings using the updated neural network, for use in the sampling step.

10. The method of any preceding claim, wherein updating the neural network comprises the use of invariance regularisation.

11. The method of any preceding claim, wherein the neural network is configured for domain generalisation.

12. The method of any preceding claim, wherein the neural network is configured to assign classifications to input data.

13. The method of claim 12, wherein training data for training the neural network comprises acoustic data, and the neural network is configured to classify a sound source corresponding to the acoustic data.

14. The method of claim 13, wherein the classes of sounds comprise sounds produced by different types of marine vessel.

15. The method of claim 14, wherein the types of marine vessel include at least one of pleasure vessel, cargo vessel, fishing vessel, and military vessel.

Fig. 1

200

START

**202**
obtain feature embeddings from training data

**204**
sample training data to generate minibatch

**206**
determine dissimilarity of embeddings

**208**
select instances for minibatch

**210**
update neural network

END

Fig. 2

Fig. 3

| | Europäisches Patentamt European Patent Office Office européen des brevets | EUROPEAN SEARCH REPORT | Application Number EP 24 27 5091 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHENG ZHANG ET AL: "Determinantal Point Processes for Mini-Batch Diversification", ARXIV.ORG, CORNELL UNIVERSITY LIBRARY, 201 OLIN LIBRARY CORNELL UNIVERSITY ITHACA, NY 14853, 1 May 2017 (2017-05-01), XP080971811, [retrieved on 2025-01-18] * the whole document * | 1-15 | INV. G06N3/096 ADD. G06N3/084 |
| A | XI LENG ET AL: "Diversity Boosted Learning for Domain Generalization with Large Number of Domains", ARXIV.ORG, CORNELL UNIVERSITY LIBRARY, 201 OLIN LIBRARY CORNELL UNIVERSITY ITHACA, NY 14853, 28 July 2022 (2022-07-28), XP091281786, [retrieved on 2025-01-18] * Sections 1, 3, 6 * | 1-15 | |
| A | Arthur David ET AL: "k-means++: The Advantages of Careful Seeding", , 7 June 2006 (2006-06-07), XP093240808, Retrieved from the Internet: URL:http://ilpubs.stanford.edu:8090/778/1/2006-13.pdf [retrieved on 2025-01-18] * Sections 1-5 * | 1-15 | TECHNICAL FIELDS SEARCHED (IPC) G06N |
| T | ANDREA NAPOLI ET AL: "Improving Distribution Alignment with Diversity-based Sampling", ARXIV.ORG, CORNELL UNIVERSITY LIBRARY, 201 OLIN LIBRARY CORNELL UNIVERSITY ITHACA, NY 14853, 5 October 2024 (2024-10-05), XP091905263, * the whole document * | 1-15 | |

The present search report has been drawn up for all claims

| Place of search | Date of completion of the search | Examiner |
|---|---|---|
| The Hague | 20 January 2025 | Efthymiadis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

   .........................................................................
& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **I. GULRAJANI** ; **D. LOPEZ-PAZ**. In Search of Lost Domain Generalization. *ICLR*, 2021
- **B. SUN** ; **K. SAENKO**. Deep CORAL: Correlation Alignment for Deep Domain Adaptation. *ECCV*, July 2016, vol. 9915, 443-450
- **Y. GANIN et al.** Domain-Adversarial Training of Neural Networks. *JMLR*, 2015